Europäisches Patentamt

(19) European Patent Office

Office européen des brevets

(11) Numéro de publication: **0 251 926**
A1

# (12) DEMANDE DE BREVET EUROPEEN

(21) Numéro de dépôt: 87401515.9

(22) Date de dépôt: 30.06.87

(51) Int. Cl.³: **B 64 D 17/38**
B 64 D 17/74

(30) Priorité: 30.06.86 FR 8609447

(43) Date de publication de la demande:
07.01.88 Bulletin 88/1

(84) Etats contractants désignés:
AT BE CH DE ES FR GB GR IT LI LU NL SE

(71) Demandeur: PARACHUTES DE FRANCE S.A.
30, rue Letort
F-75018 Paris(FR)

(72) Inventeur: Sauvage, Guy
c/o Parachutes de France 30 rue Letort
75018 Paris(FR)

(74) Mandataire: Vigand, Privat et al,
SOSPI 14-16, rue de la Baume
F-75008 Paris(FR)

(54) Dispositif pour la mise en oeuvre d'un parachute de secours.

(57) Dispositif pour la mise en oeuvre d'un parachute de secours muni d'un extracteur par traction sur des moyens de fermeture fermant le sac (10) contenant ledit parachute de secours comportant des moyens de liaison pour relier les deux élévateurs (1, 1') du parachute principal auxdits moyens de fermeture, lesdits élévateurs (1, 1') se détachant du parachutiste lorsque celui-ci se libère du parachute principal, lesdits moyens de fermeture pouvant être également commandés par une commande manuelle (13, 13'). Chaque élévateur (1, 1') du parachute principal est relié par une liaison distincte (20, 20') aux moyens de fermeture ceux-ci ne permettant au sac (10) de s'ouvrir que lorsqu'une traction est appliquée sur chacune des deux liaisons (20, 20').

Le parachute de secours est commandé par le détachement des deux élévateurs au parachute principal, ce qui évite qu'il vienne s'emmêler avec le parachute. De plus, si le parachute de secours est déployé avant le parachute principal, les liaisons entre élévateurs et moyens de fermeture ne viennent pas gêner le déploiement du parachute principal.

FIG. 3

EP 0 251 926 A1

## Dispositif pour la mise en oeuvre d'un parachute de secours.

La présente invention a trait à un dispositif pour la mise en oeuvre d'un parachute de secours muni d'un extracteur par traction sur des moyens de fermeture fermant le sac contenant ledit parachute de secours comportant des moyens de liaisons pour relier les deux élévateurs du parachute principal auxdits moyens de fermeture, lesdits élévateurs se détachant du parachutiste lorsque celui-ci se libère du parachute principal, lesdits moyens de fermeture pouvant être également commandés par une commande manuelle.

Il est connu un tel dispositif de commande FR-A-8 006 685 dans lequel les moyens de liaison comportent une bande reliant les deux élévateurs et une drisse dont une extrémité coulisse sur la bande et dont l'autre extrémité bloque les moyens de fermeture.

Ainsi lorsqu'il se produit un incident avec le parachute principal et que le parachutiste se sépare de ce dernier, les moyens de fermeture du sac du parachute de secours ne sont ouverts que lorsque les deux élévateurs du parachute principal sont séparés du parachutiste, ce qui évite le risque que le parachute de secours viennent s'emmêler avec le parachute principal.

Toutefois lorsque par suite d'une erreur le parachutiste fait les manoeuvres dans l'ordre suivant : ouverture du parachute de secours grâce à l'extracteur, ouverture du parachute principal, libération du parachute principal, le parachute principal du fait de la bande de liaison entre les deux élévateurs viendra enserrer le parachute de secours et pourra gêner ce dernier dans son évolution.

Le dispositif selon l'invention conservant les avantages du dispositif connu et ne présentant pas l'inconvénient d'avoir une bande de liaison entre les deux élévateurs est caractérisé en ce que chaque élévateur du parachute principal est relié par une liaison distincte aux moyens de fermeture, ceux-ci ne permettant au sac de s'ouvrir que lorsqu'une traction est appliquée sur chacune des deux liaisons, et en ce que les moyens de fermeture comportent un oeillet solidaire du rabat du sac et au moins une boucle terminant une ou des drisses fixée(s) au fond du sac, la ou les boucles dépassant

- 2 -

de l'oeillet, les liaisons étant reliées chacune à une broche de verrouillage passant à travers la ou les boucles, lesdites broches étant également reliées aux moyens de commande manuelle.

La présente invention sera mieux comprise à la lumière de la description en regard des dossiers amenés dans lesquels :

- La figure 1 représente un schéma du dispositif connu de mise en oeuvre du parachute de secours,

- La figure 2 représente une vue détaillée du dispositif connu,

- La figure 3 représente une première réalisation du dispositif selon l'invention,

- La figure 4 représente une seconde réalisation du dispositif selon l'invention,

- La figure 5 représente une troisième réalisation du dispositif selon l'invention pour des parachutes de secours prenant une grande longueur.

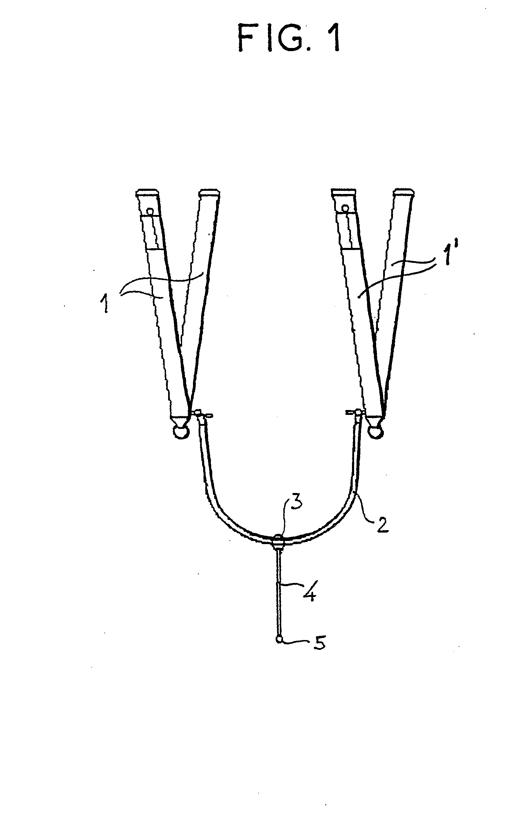

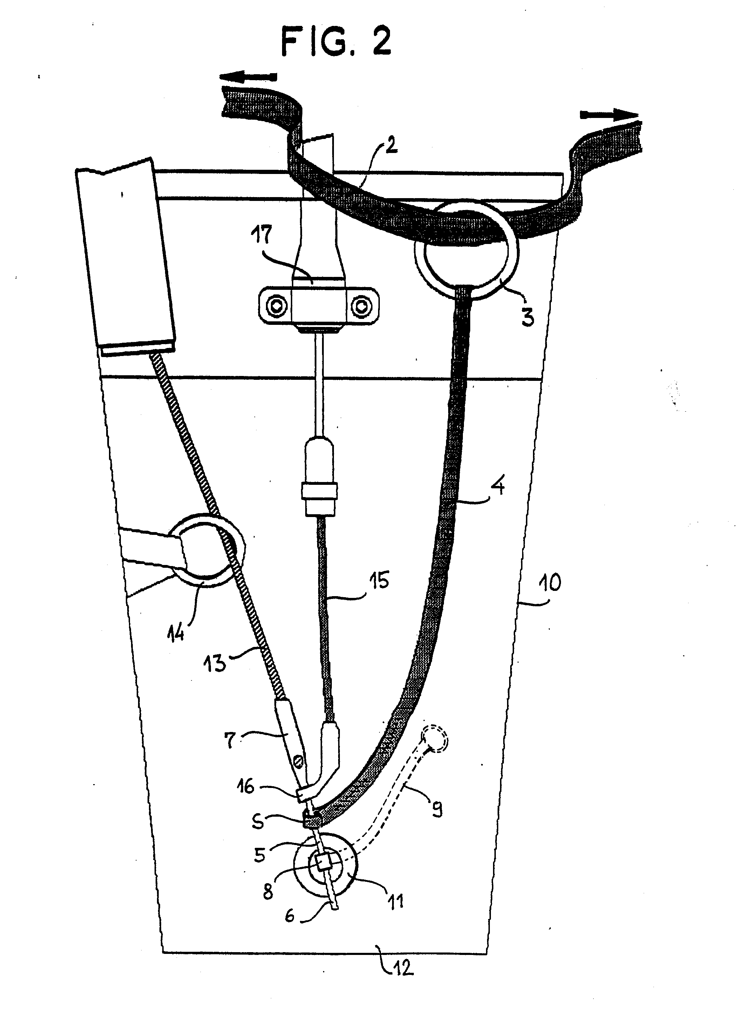

Dans le dispositif connu (voir figures 1 et 2) les deux élévateurs 1, 1' du parachute principal sont reliés par une bande de liaison 2. Sur cette bande 2 coulisse un anneau 3 auquel est reliée une sangle 4. Cette sangle 4 comporte une boucle ou anneau 5 qui coulisse sur le doigt 6 d'une broche 7. Ce doigt 6 est passé dans la boucle 8 d'une drisse 9. La drisse 9 est fixée au fond du sac 10 contenant le parachute de secours.

La bande 8 dépasse d'un oeillet 11 situé sur le rabat 12 du sac 10 contenant le parachute de secours. La broche 7 est reliée à un câble de déclenchement manuel 13. Il passe par un anneau de guidage 14 solidaire du sac 10.

Un autre câble 15 est muni à sa partie inférieure d'un anneau 16 coulissant sur le doigt 6 de la broche 7. Ce câble 15 est relié à un dispositif d'ouverture automatique 17. La boucle 5 et l'anneau 16 sont enfilés sur la broche 7 avant que celle-ci soit inserrée dans la bande 8.

Ainsi le parachute de secours peut être mis en oeuvre par déclenchement manuel lorsque le parachutiste tire sur le câble 13 ou par fonctionnement du dispositif 14 d'ouverture automatique.

- 3 -

Ce dispositif 14 est facultatif et ne se retrouve pas sur tous les parachutes. Enfin le parachute de secours est mis en oeuvre lorsque les élévateurs 1 sont séparés tous les deux du parachute et que la bande tire sur la sangle 4.

Dès l'instant où la boucle 8 est libérée, le rabat 12 est libre et peut s'ouvrir et le parachute de secours se déploie à l'aide de l'extracteur se trouvant libéré.

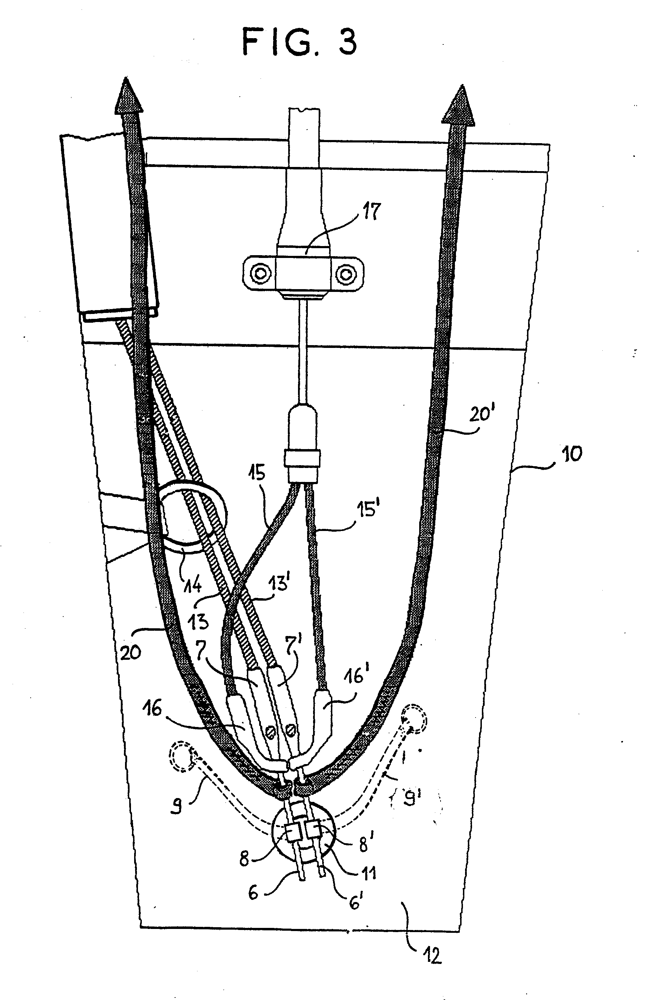

Le dispositif selon l'invention (voir figure 3) comporte deux sangles de liaison 20, 20' reliées l'une à l'élévateur droit 1' l'autre à l'élévateur gauche 1. Ces deux sangles 20, 20' comportent à leur partie inférieure des boucles ou anneaux 21, 21' qui sont enfilés chacune sur les doigts 6, 6' de broches 7, 7'. Ces doigts sont enfilés dans les boucles 8, 8' de drisses 9, 9' reliées à leur extrémité inférieure au fond du sac 10 du parachute de secours. Les boucles 8, 8' dépassent d'un oeillet 11 fixé sur le rabat 12. Les broches 7, 7' sont reliées à des câbles 13, 13' de déclenchement manuel. Sur les doigts 6, 6' des broches 7, 7' sont enfilés, des anneaux 16, 16' situés à l'extrémité des câbles 15, 15' qui sont reliés à un dispositif de commande automatique 17. Les broches 7, 7' sont enfilées dans les boucles 8, 8' lorsque les boucles 21, 21' et les anneaux 26, 26' sont en place. L'oeillet 11 peut être dégagé en tirant sur les câbles 13, 13' (fonctionnement manuel) ainsi que sur les câbles 15, 15' (fonctionnement automatique). L'oeillet 11 est également dégagé lorsque les deux élévateurs ont été séparée du parachutiste et ont exercé une traction sur les sangles 20, 20'. Tant qu'un des deux élévateurs n'est pas dégagé, la broche associée est toujours en place et l'oeillet 11 n'est pas dégagé. Il n'y a donc pas de risque que le rabat 12 puisse s'ouvrir, libérant le parachute de secours avant que les deux élévateurs aient été dégagés.

D'autre part lorsque les deux broches 7, 7' sont dégagées, les boucles 8, 8' sont libérées et les anneaux 16, 16' et 5, 5' s'échappent des broches 7, 7'. Il s'ensuit que les sangles 20, 20' sont totalement libres l'une par rapport à l'autre et il n'y a pas de risque qu'elles viennent s'emmêler dans le parachute principal

si celui-ci venait à être ouvert après le parachute de secours.

Le fait qu'il n'y ait qu'un seul oeillet 11 permet d'avoir une très grande sécurité et simplicité d'ouverture du parachute de secours. Dans la réalisation de la figure 3 il y a deux drisses 9 et 9' mais ces deux drisses pourraient être remplacées par une drisse unique avec deux boucles 8, 8' ou une seule boucle.

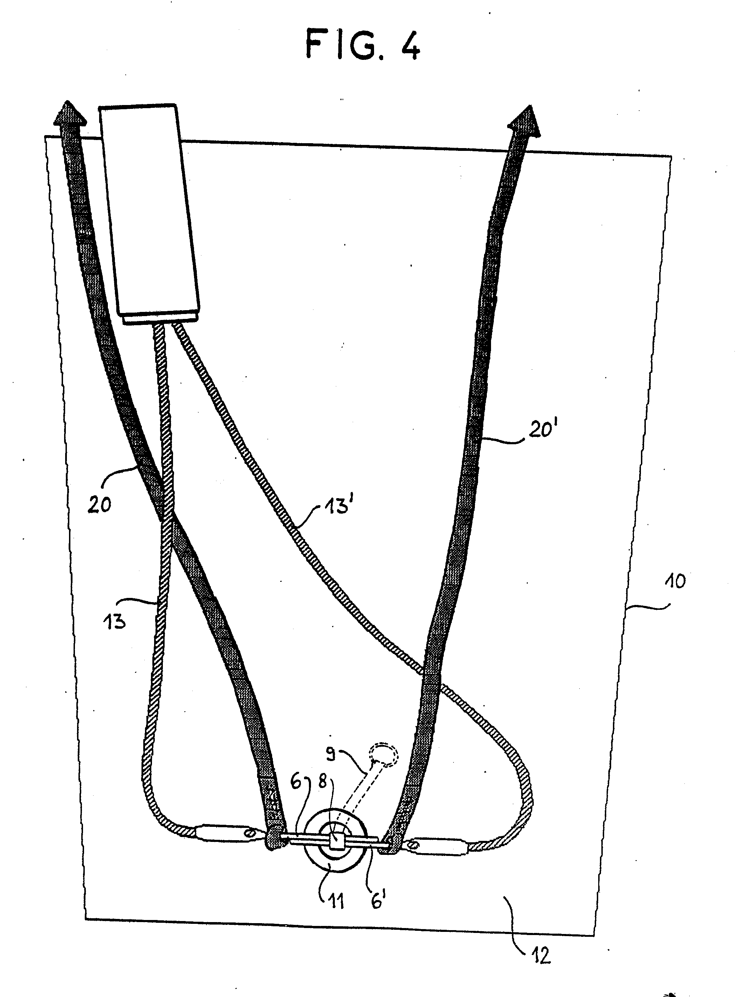

Dans le dispositif de la figure 3 les doigts 6, 6' des broches 7, 7' ont été enfilées dans le même sens dans les boucles 8, 8' mais elles pourraient être enfilées tête-bêche. On peut lorsque les broches 7, 7' sont montées tête-bêche enfiler les deux doigts 6, 6' dans une seule et même boucle 8 qui est alors unique (voir figure 4).

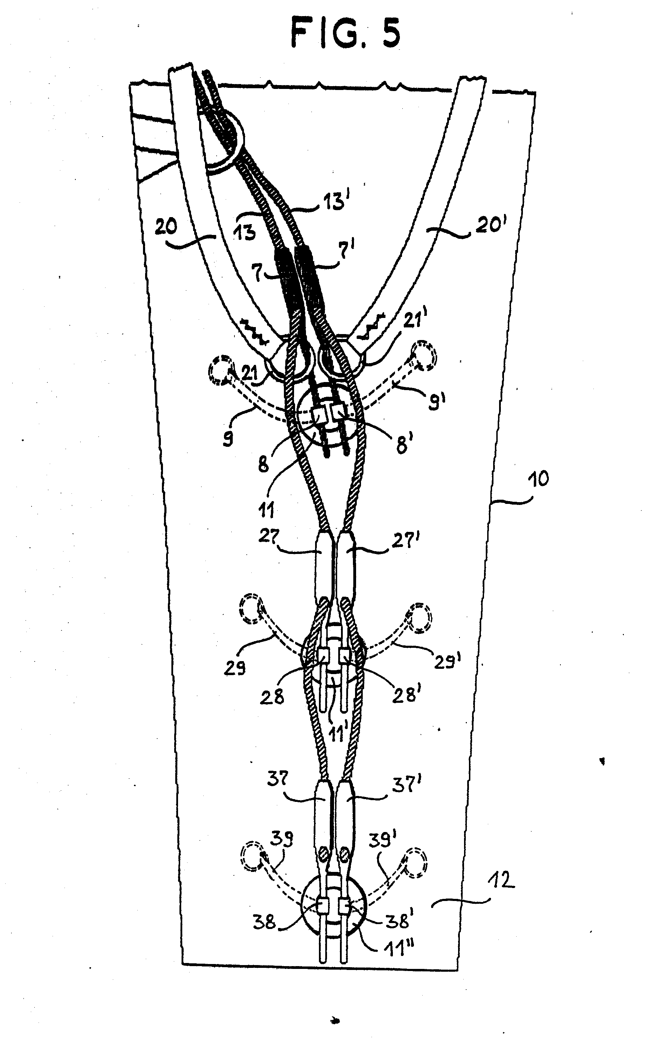

La figure 5 représente une autre variante de l'invention dans laquelle le rabat comporte plusieurs oeillets supplémentaires 11', 11", en sus de l'oeillet 11, chaque oeillet comporte deux boucles 8, 8', 28, 28', 38, 38' de deux drisses 9, 9', 29, 29', 39, 39'.

Chaque oeillet comporte deux boucles 8, 8', 28, 28', 38, 38' de deux drisses 9, 9', 29, 29', 39, 39'.

Dans chaque boucle est disposée le doigt 6, 6', 26, 26', 36, 36' d'une broche 7, 7', 27, 27', 37, 37'.

La broche 7 est reliée à un câble de commande manuelle 13 tandis que la broche 7' est reliée à un autre câble de commande manuelle 13'. Les broches 27 et 37 sont reliées à la broche 7 et les broches 27' et 37' à la broche 7'. La sangle 20 reliée à l'élévateur droit comporte un anneau 21' enserrant le doigt 6' de la broche 7' de même la sangle 20 reliée à l'élévateur gauche comporte un anneau 21 enserrant le doigt de la broche 7.

Lorsque, par exemple l'élévateur gauche se détache, la sangle 20 arrache la broche 7 et les broches 27 et 37 sont alors arrachées. Mais les oeillets 11, 11', 11" ne sont libérés que lorsque l'élévateur droit est également détaché et que la sangle 20' arrache la broche 7' et que les broches 27' et 37' sont aussi arrachées.

Lorsqu'on a deux boucles dans le même oeillet, on peut utiliser soit deux drisses distinctes avec une boucle chacune soit une drisse double avec deux boucles.

- 5 -

0251926

Les drisses ont été représentées sur les diverses figures avec leur extrémité fixée au fond du sac, mais cette extrémité pourrait être fixée à un autre endroit du sac et notamment sur un rabat en dessous du rabat 12.

REVENDICATIONS :

1/ Dispositif pour la mise en oeuvre d'un parachute de secours muni d'un extracteur par traction sur des moyens de fermeture fermant le sac (10) contenant ledit parachute de secours comportant des moyens de liaison pour relier les deux élévateurs (1, 1') du parachute principal auxdits moyens de fermeture, lesdits élévateurs (1, 1') se détachant du parachutiste lorsque celui-ci se libère du parachute principal, lesdits moyens de fermeture pouvant être également commandés par une commande manuelle (13, 13') caractérisé en ce que chaque élévateur (1, 1') du parachute principal est relié par une liaison distincte (20, 20') aux moyens de fermeture ceux-ci ne permettant au sac (10) de s'ouvrir que lorsqu'une traction est appliquée sur chacune des deux liaisons (20, 20') et en ce que les moyens de fermeture comportent une oeillet (11) solidaire du rabat (12) du sac (10) et au moins une boucle (8, 8') terminant une ou des drisses (9, 9') fixée(s) au fond du sac, la ou les boucles (8, 8') dépassant de l'oeillet (11), les liaisons (20, 20') étant reliées chacune à une broche (7, 7') de verrouillage passant à travers la ou les boucles (8, 8'), lesdites broches (7, 7') étant également reliées aux moyens de commande manuelle (13, 13').

2/ Dispositif selon la revendication 1 caractérisé en ce que les moyens de fermeture comportent une drisse (9) à une boucle (8), les broches de verrouillage (7, 7') étant enfilées tête-bêche dans la boucle (8).

3/ Dispositif selon la revendication 1 caractérisé en ce que les moyens de fermeture comportent (n-1) oeillets supplémetaires (11', 11") solidaires du rabat du sac, chacun des n oeillets (11, 11', 11") étant associé à une paire de boucles (8, 8', 28, 28', 38, 38') à l'extrémité de drisses (9, 9', 29, 29', 39, 39') dont l'autre extrémité est fixée au sac (10), chaque paire de boucles (8, 8', 28, 28', 38, 38') dépassant d'un oeillet (11, 11', 11") et étant muni d'une paire de broches (7, 7' 27, 27', 37, 37'), les premières broches (7, 27, 37) de chaque paire étant reliées aux moyens de commandes manuelles (13, 13') et à une des liaisons (20) tandis que les secondes broches (7', 27', 37') de chaque paire sont reliées aux moyens de commande manuelle (13, 13') et à  l'autre liaison
(20') de façon que lorsque les broches (7, 7', 27, 27', 37, 37')
sont libérées, les liaisons (20, 20') soient libérées.

FIG. 1

# FIG. 2

# FIG. 3

# FIG. 4

# FIG. 5

# 0251926

**RAPPORT DE RECHERCHE EUROPEENNE**

Numéro de la demande

EP 87 40 1515

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-1 202 833 (ATELIERS REPARATIONS AVIOREX) * Colonne de droite, lignes 28-38; figure 5 * | 1 | B 64 D 17/38 B 64 D 17/74 |
| | --- | | |
| A | FR-A-2 244 668 (SNYDER) * Page 2, lignes 35-40 * | 1 | |
| | --- | | |
| D,A | FR-A-2 479 137 (PARACHUTES DE FRANCE) * En entier * | 1 | |
| | ----- | | |

**DOMAINES TECHNIQUES RECHERCHES (Int. Cl.4)**

B 64 D

Le présent rapport de recherche a été établi pour toutes les revendications

| Lieu de la recherche | Date d'achèvement de la recherche | Examinateur |
|---|---|---|
| LA HAYE | 06-10-1987 | HAUGLUSTAINE H.P.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82